(19) Europäisches Patentamt
European Patent Office
Office européen des brevets

(11) **EP 3 151 189 B1**

(12) **EUROPEAN PATENT SPECIFICATION**

(45) Date of publication and mention
of the grant of the patent:
**15.12.2021 Bulletin 2021/50**

(51) Int Cl.:
***G06T 1/00*** *(2006.01)*

(21) Application number: **15306554.5**

(22) Date of filing: **02.10.2015**

(54) **METHOD FOR DETERMINING A MODIFIABLE BLOCK**

VERFAHREN ZUR BESTIMMUNG EINES MODIFIZIERBAREN BLOCKS

PROCÉDÉ PERMETTANT DE DÉTERMINER UN BLOC MODIFIABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.04.2017 Bulletin 2017/14**

(73) Proprietor: **ContentArmor
35700 Rennes (FR)**

(72) Inventors:
• **DOERR, Gwenaël
35576 Cesson-Sévigné (FR)**
• **ROBERT, Antoine
35576 Cesson-Sévigné (FR)**

(74) Representative: **Vidon Brevets & Stratégie
16B, rue de Jouanet
BP 90333
35703 Rennes Cedex 7 (FR)**

(56) References cited:
**WO-A1-2015/028098     US-A1- 2004 044 894
US-A1- 2011 142 418**

• **MANELI NOORKAMI ET AL: "A Framework for
Robust Watermarking of H.264-Encoded Video
With Controllable Detection Performance", IEEE
TRANSACTIONS ON INFORMATION FORENSICS
AND SECURITY, IEEE, PISCATAWAY, NJ, US, vol.
2, no. 1, 1 March 2007 (2007-03-01), pages 14-23,
XP011165510, ISSN: 1556-6013, DOI:
10.1109/TIFS.2006.890306**
• **SWANSON ET AL: "Transparent Robust Image
Watermarking", PROCEEDINGS OF THE
SINGAPORE INTERNATIONAL CONFERENCE
ON IMAGEPROCESSING, XX, XX, vol. 3, no. 3, 16
September 1996 (1996-09-16), pages 211-214,
XP002097961,**
• **None**

**Description**

Technical domain

The present principles relate to video watermarking. More particularly, the present principles relate to a method for determining a modifiable block among a plurality of watermark candidate blocks, and associated devices implementing the method.

Background

This section is intended to introduce the reader to various aspects of the art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

In the domain of copy protection, video watermarking techniques essentially consist in modifying an image so that it carries a message. For instance, WO 2010/021682 A1 from the applicant describes a technique that modifies a number of macroblocks in an image by altering the corresponding motion vectors used for prediction. To be eligible for watermarking, these modifications should yield a large enough distortion so that it survives subsequent processing (e.g. lossy compression, screencasting, camcording, etc) and small enough in order to remain imperceptible to human observer. This trade-off between robustness and perceptual fidelity is typical in watermarking.

To tackle this compromise, it is necessary to rely on a number of objective metrics that are intended to predict how perceptible is a change made to a block. Metrics are known to account for the characteristic visual artifacts appearing when modifying the motion vector used for prediction:

- The eye is sensitive to a local change of luminance. Such distortion can be captured by computing standard distortions such as the root mean square error (RMSE) or mean absolute distortion (MAD).
- Modified blocks are prone to introduce blocking artifacts. This can be captured by measuring the impact of applying a deblocking filter to the image and/or by relying on some blockiness metric as disclosed in EP2314073B1 for instance.
- The eye is sensitive to changes in regular gradients. This can be captured by computing the Watson metric for a reduced number of low-frequency DCT modes.

Further examples of alternative solutions employing metrics in watermarking are provided by the following documents:

- US 2011/142418 A1 (HE SHAN [US] ET AL);
- MANELI NOORKAMI ET AL: "A Framework for Robust Watermarking of H.264-Encoded Video With Controllable Detection Performance",IEEE TRANSACTIONS ON INFORMATION FORENSICS AND SECURITY, IEEE, PISCATAWAY, NJ, US, vol. 2, no. 1, 1 March 2007, pages 14-23;
- WO 2015/028098 A1 (CENTUM RES & TECHNOLOGY S L U [ES]);
- SWANSON ET AL: "Transparent Robust Image Watermarking",PROCEEDINGS OF THE SINGAPORE INTERNATIONAL CONFERENCE ON IMAGE PROCESSING, vol. 3, no. 3, 16 September 1996, pages 211-214.

During an analysis phase that is responsible for assessing whether candidate changes should be discarded or kept, these metrics are computed and compared to their corresponding visibility threshold. If a single measurement exceeds its associated threshold, the corresponding change is discarded.

However, in some cases, these metrics fail to spot highly noticeable artifacts e.g. when an edge is slightly shifted in the modified block while the neighbor ones remain in place, thereby producing a ragged contour. In addition, when the video is played back, such successive occasional localized shifts of an edge can also create a highly noticeable flicker.

Accordingly, a new objective metric used in watermarking technique is needed that would capture ragged contour artifacts.

Summary

The purpose of the present principles is to overcome at least one of the disadvantages of the prior art by proposing a method that looks at the distribution of the pixel errors in a block to evaluate how the modification of the block is scattered throughout the considered block. Instead of averaging the contribution of each individual pixel error in a manner similar to RMSE or MAD, the proposed method advantageously measures a distortion that is concentrated on a few pixels where such distortion would otherwise be reasonable when inspected globally at the block level. If the error is too concentrated, the alternative block is discarded. Advantageously, the present principles yield avoiding the previously described ragged contour and flickering artifacts.

To this end, according to a first embodiment, a method for watermarking according to claim 1 is defined.

According to a second embodiment, a method for watermarking according to claim 2 is defined.

Further embodiments are defined by the computer-storage medium of claim 5 and device claims 6 and 7.

Further detailed embodiments are defined in the dependent claims.

While not explicitly described, the present embodiments may be employed in any combination or sub-combination. For example, the error block concentration metric may be combined in its two embodiments relative to index and entropy. Besides, any characteristic or variant described for the methods is compatible with a device intended to process the disclosed methods and with a computer-readable storage medium storing program instructions.

Brief description of the drawings

Other characteristics and advantages of the present principles will appear through the description of non-limiting embodiments, which will be illustrated, with the help of the enclosed drawings.

- **Figure 1** represents an image and a modified image illustrating the ragged contour issue,
- **Figure 2** represents a method for determining a modifiable block according to a particular embodiment,
- **Figure 3** represents a method for determining a modifiable block according to another particular embodiment,
- **Figure 4** illustrates the error concentration metric according to the embodiment of figure 3,
- **Figure 5** illustrates a device that may be used to implement any of the methods of the present principles,
- **Figure 6** illustrates another architecture of a device that may be used to implement any of the methods of the present principles.

Detailed description of preferred embodiments

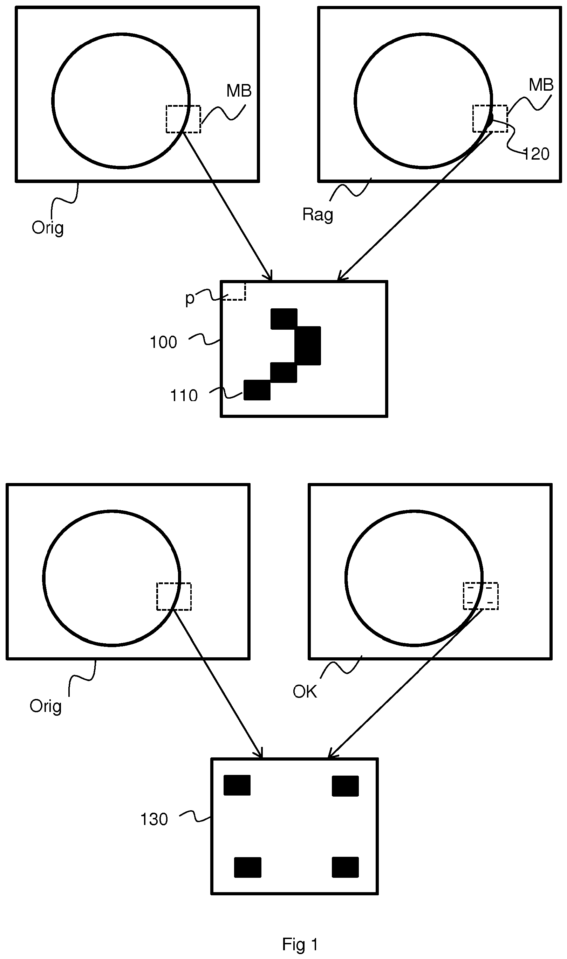

**Figure 1** represents an image and its modified version illustrating the ragged contour issue. A video image Orig is divided into blocks MB comprising a set of N pixels p, N being an integer representative of the number of pixels in the block. Typically, a block is a set of $16 \times 16$ pixels also called macroblock. However any size of block being a sub-division of an image is compatible with the present principles. Thus the skilled in the art will understand block value correspond to a set of pixel values where a pixel value is for instance an R, G, B components. The watermarking process inserts a mark by altering values of blocks of the original image Orig resulting into a modified image Rag or OK.

In some cases, known metrics fail to spot highly noticeable artefacts e.g. when an edge is slightly shifted for the modified block MB while the neighbour ones remain in place, thereby producing a ragged contour 120. Such visual anomalies correspond to a distortion 100 for the block MB between original image Orig and modified image Rag, that is concentrated on a few pixels 110 but that is otherwise reasonable when inspected globally at the block level with other visibility criterion. On the contrary scattered block distortion 130, where the error is dispatched in the block are less noticeable to a user.

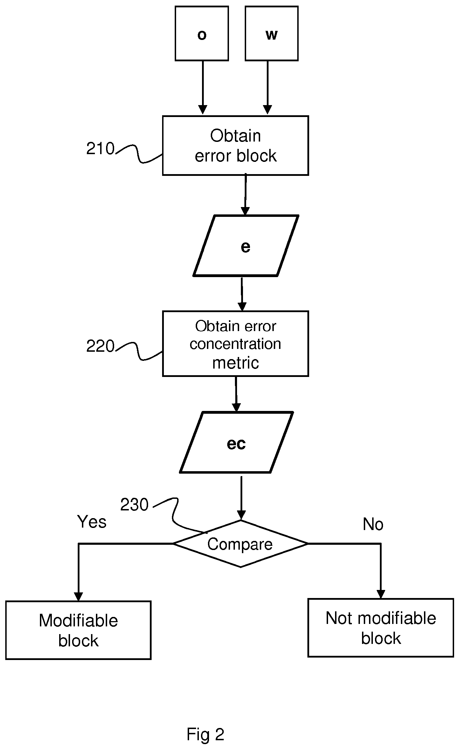

**Figure 2** represents a method for determining a modifiable block among a plurality of candidate blocks according to a first embodiment.

In the following of the description, a video image Orig is divided into blocks MB comprising a set of N pixels. According to a variant, a block comprises $16 \times 16$ pixels.

In preliminary step, watermark candidate blocks are determined by a watermarking technique such as described in WO 2010/021682 and a preliminary filtering of candidate blocks for low perceptual impact according to some known metrics. The watermarking technique determines a block value, an alternative block value and a location of the block in the image. As previously explained, a block value comprises the value of each of the pixels of the block, for instance $16 \times 16$ values.

In a first step 210 of this particular embodiment, an error block **e** is obtained with respect to a block value **o** and a modified block value **w** for a candidate block among the plurality of candidate blocks.

In a first variant, the error block **e** is the absolute difference between the two blocks:

$$\mathbf{e}(p) = |\mathbf{w}(p) - \mathbf{o}(p)|,$$

where **o** is the original block value, **w** its modified version, and $p$ an index used to scan the pixel locations of the blocks. In another variant, the error block is the squared error between the two blocks:

$$\mathbf{e}(p) = (\mathbf{w}(p) - \mathbf{o}(p))^2.$$

The error block is therefore defined per pixel. However, in others variants, the error block is computed for a higher granularity, such as units of 2 or 4 pixels. Indeed, the present principles relying on a concentration of the error in the block are compatible with any sub-unit of a block allowing to measure such concentration.

In a second step 220, an error concentration metric **ec** is computed or determined from the error block so as to assess if the error per block is concentrated or not. In a first embodiment, a global approach for evaluating the concentration of the error comprises looking at the entropy of the distribution of the error. In this embodiment, the error is first normalized

$$\bar{\mathbf{e}}(p) = \mathbf{e}(p)/\sum_{p=1}^{N} \mathbf{e}(p)$$

in order to assimilate the error block to some kind of probability density function where the components of the normalized error sum to 1. The concentration metric of the error **ec** is then evaluated by looking at its entropy for instance defined by:

$$ec = -\sum_{p=1}^{N} \bar{e}(p).\log\big(\bar{e}(p)\big).$$

Smaller values of *ec* indicate a higher concentration of the error in the block. By comparing the value of the error concentration metric to a target called concentration value $ec_T$, it is possible to isolate blocks with undesired error concentration.

This is done in a third step 230 where the candidate block is determined as being a modifiable block based on the assessment of error concentration metric. Thus the error concentration metric *ec* is compared with a concentration value $ec_T$. According to the first embodiment, a candidate block is a modifiable block in the case where the error concentration metric attached to the candidate block is lower than the concentration value $ec_T$.

Advantageously, the above method is repeated for each candidate block in the watermarking technique so as to filter candidate watermark block. Besides the above method might be combined with additional visibility metrics of the watermarking technique.

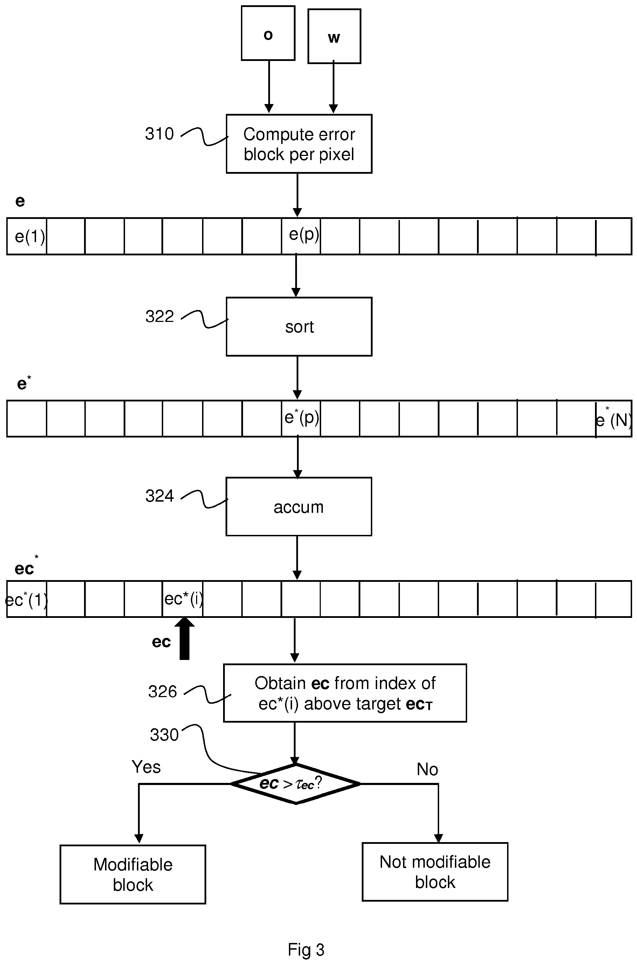

**Figure 3** represents a method for determining a modifiable block according to another particular embodiment.

As in the first embodiment, in a first step 310 of this second embodiment, an error block **e** is obtained with respect to a block value **o** and a modified block value **w** for a candidate block among the plurality of candidate blocks according to any variant of the error block. The error block **e**(*p*) is defined for each pixel or group of pixels of index p (p being an integer) of the candidate block. According to non-limiting examples, the error block **e** is the absolute difference between the two blocks or the squared error between the two blocks.

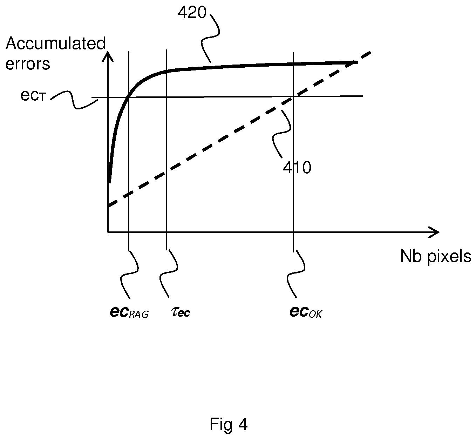

Then an error concentration metric **ec** is computed or determined from the error block **e**. In this second embodiment, the concentration of the error measures how much of the global error is contained in a given percentile of the error block as presented on figure 4. To that end, in a second step 322, the error block **e** is sorted by descending order of error block values e(p) so as to obtain a sorted error vector **e*** such that **e***(1) > **e***(2) >...> **e***(N) where *N* is the number of pixels or group of pixels in the block.

In a third step 324, a normalized accumulated error vector **ec*** is computed or determined according to:

$$ec^{*}(i) = \sum_{p=1}^{i} e^{*}(p)\Big/\sum_{p=1}^{N} e^{*}(p),$$

where **e*** is the sorted error vector, i the index of the error belonging to (1 ,*N*) and N is the number of pixels or group of pixels in the block.

In a fourth step 326, the error concentration metric is determined by obtaining a minimum index i of the normalized accumulated error vector **ec*** for which a normalized accumulated error value **ec***(i) is larger than a target value $ec_T$. Thus the error concentration metric ec indicates that a given percentile of the error is concentrated in a small percentile of the pixels of the block.

Accordingly the index is obtained by:

$$\begin{cases} ec^{*}(i) > ec\mathrm{T} \\ ec^{*}(i-1) \leq ec\mathrm{T} \end{cases} \qquad ec = i/N \;,$$

where $ec \in (0,1)$ is the percentile of the pixels of the block representing the ecr part of the distribution. For instance, if $ec_T$ =0.9 and $ec_{RAG}$ =0.1, it indicates that 90% of the error is concentrated in only 10% of the pixels of the block as illustrated on figure 4 by curve 420. As a result, by combining this percentile value *ec* and an associated threshold $\tau_{ec}$, it is possible to identify candidate blocks with undesired error concentration that may yield noticeable visual artifacts. In other words, the candidate block is a modifiable block in the case where the error concentration metric *ec* is larger than a concentration value $\tau_{ec}$. This is performed in a last step 330.

These two error concentration measurements can of course be advantageously combined.

**Figure 4** illustrates the error concentration metric according to the embodiment of figure 3. The curve 410 shows a block where the accumulated error is split along the number of pixels of the block while curve 420 shows a block where the accumulated error is concentrated on a few pixels. Thus, on the curve 420, the accumulated error value $ec_T$ is reached for a few number of pixels $ec_{RAG}$ below the error concentration metric $\tau_{ec}$. On the contrary, on the curve 410, the accumulated error value $ec_T$ is reached for a large number of pixels $ec_{OK}$ above the error concentration metric $\tau_{ec}$.

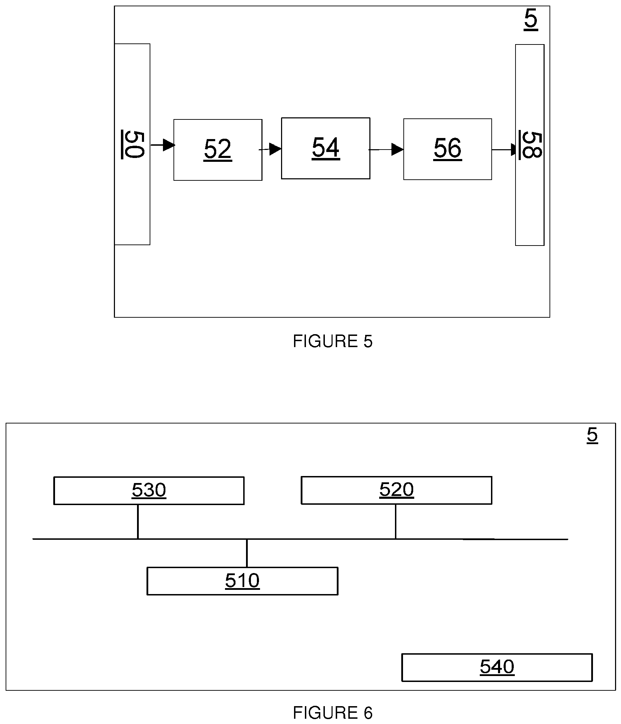

**Figure 5** depicts a device 5 for determining a modifiable block among a plurality of candidate blocks according to any of the methods previously described. The device 5 comprises an input 50 configured to receive at least one video images and associated watermark data such as watermark candidate blocks. The video images may be obtained from a source. According to different embodiments of the present principles, the source belongs to a set comprising:

- a local memory, e.g. a video memory, a RAM, a flash memory, a hard disk;
- a storage interface, e.g. an interface with a mass storage, a ROM, an optical disc or a magnetic support;
- a communication interface, e.g. a wired interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

Watermark candidate blocks in the video image, wherein a watermark candidate block comprises, in a non-limiting embodiment, a block value, an alternative block value and a location of the block in the image, are obtained by a watermarking module internal or external to the device 5. The input 50 is linked to a module 52 configured to obtain an error block with respect to the block value and the alternative block value. The module 52 is linked to a module 54 configured to obtain a metric representative of the concentration of the error into the block according to any of the embodiments previously described. The module 56 is then configured to determine if a candidate block is a modifiable block or not based on the metric representative of the concentration of the error into the block. The module 56 is linked to an output 58. The modifiable blocks and associated watermark data can be stored in a memory or can be sent to a watermark embedder. As an example, the modifiable blocks are stored in a remote or in a local memory, e.g. a video memory or a RAM, a hard disk. In a variant, the modifiable blocks are sent to a watermark embedder by means of a storage interface, e.g. an interface with a mass storage, a ROM, a flash memory, an optical disc or a magnetic storage and/or transmitted over a communication interface, e.g. an interface to a point-to-point link, a communication bus, a point to multipoint link or a broadcast network.

**Figure 6** represents an exemplary architecture of the device 5 according to a specific and non-limitative embodiment of the present principles. The processing device 5 comprises one or more processor(s) 510, which is (are), for example, a CPU, a GPU and/or a DSP (English acronym of Digital Signal Processor), along with internal memory 520 (e.g. RAM, ROM, EPROM). The processing device 5 comprises one or several Input/Output interface(s) 530 adapted to display output information and/or allow a user entering commands and/or data (e.g. a keyboard, a mouse, a touchpad, a webcam, a display); and a power source 540 which may be external to the processing device 5. The processing device 5 may also comprise network interface(s) (not shown). According to an exemplary and non-limitative embodiment of the present principles, the processing device 5 further comprises a computer program stored in the memory 520. The computer program comprises instructions which, when executed by the processing device 5, in particular by the processor 510, make the processing device 5 carry out any of the methods described in figure 2 or 3. According to a variant, the computer program is stored externally to the processing device 5 on a non-transitory digital data support, e.g. on an external storage medium such as a HDD, CD-ROM, DVD, a read-only and/or DVD drive and/or a DVD Read/Write drive, all known in the art. The processing device 5 thus comprises an interface to read the computer program. Further, the device 5 could access one or more Universal Serial Bus (USB)-type storage devices (e.g., "memory sticks.") through corresponding USB ports (not shown).

According to exemplary and non-limitative embodiments, the processing device 5 is a device, which belongs to a set comprising:

- a mobile device;
- a communication device;
- a game device;
- a tablet (or tablet computer);
- a laptop;
- a still picture camera;
- a video camera;
- an encoding chip;
- a decoding chip;
- a still picture server;
- a video server (e.g. a broadcast server, a video-on-demand server or a web server) ; and
- a video sharing platform.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

Naturally, the present principles are not limited to the embodiments and characteristics previously described. In particular, the present principles are compatible with any watermarking technique so as to obtain the watermark candidate blocks. A watermarking technique is for instance described in WO 2010/021682 A1, but also in EP2786496 A1. Besides, the present principles are compatible with any other metric guaranteeing the imperceptibility of the watermarks.

Finally, the present principles also relate to a method for watermarking video images wherein watermarked blocks are selected according to any of claimed methods.

**Claims**

1. Method for watermarking video images wherein modifiable blocks are selected among a plurality of candidate blocks, the method comprising:

   • obtaining (210, 310) a pixel error block (**e**) with respect to an original block (**o**) and a modified block (**w**) for a candidate block among said plurality of candidate blocks;
   • determining (220) an error concentration metric (**ec**) for said pixel error block, comprising:

◦ obtaining (320) a sorted error vector ($e$*) by sorting said pixel error block in descending order of error value;
◦ computing (324) a normalized accumulated error vector ($ec$*) of said sorted error vector;
◦ determining (326) said error concentration metric ($ec$) by obtaining a minimum index of said normalized accumulation error vector for which a normalized accumulation error value is above a target value ($ec_T$);

• determining (230, 330) that said candidate block is a modifiable block in the case where said error concentration metric ($ec$) is larger than a concentration value.

2. Method for watermarking video images wherein modifiable blocks are selected among a plurality of candidate blocks, the method comprising:

• obtaining (210, 310) a pixel error block ($e$) with respect to an original block (o) and a modified block ($w$) for a candidate block among said plurality of candidate blocks;
• determining (220) an error concentration metric ($ec$) for said pixel error block, comprising computing an entropy of said pixel error block,
• determining (230, 330) that said candidate block is a modifiable block in the case where said error concentration metric is lower than a concentration value.

3. Method according to claim 1 or claim 2 wherein said pixel error block ($e$) comprises, for each pixel, the absolute difference between the pixel value of said original block and the pixel value of said modified block.

4. Method according to claim 1 or claim 2 wherein said pixel error block ($e$) comprises, for each pixel, the square distance difference between the pixel value of said original block and the pixel value of said modified block.

5. Computer-readable storage medium storing program instructions which, when executed by a computer, cause the computer to carry out the method of any of claims 1 to 4.

6. Device (5) for watermarking video images wherein modifiable blocks are selected among a plurality of candidate blocks, the device comprising at least one processor (510) configured to:

• obtain a pixel error block with respect to an original block and a modified block for a candidate block among said plurality of candidate blocks;

• compute an error concentration metric for said pixel error block, by:

◦ obtaining a sorted error vector by sorting said pixel error block in descending order of error value;
◦ computing a normalized accumulated error vector of said sorted error vector;
◦ determining said error concentration metric by obtaining a minimum index of said normalized accumulation error vector for which a normalized accumulation error value is above a target value;

• determine that said candidate block is a modifiable block in the case where said error concentration metric is larger than a concentration value.

7. Device (5) for watermarking video images wherein modifiable blocks are selected among a plurality of candidate blocks, the device comprising at least one processor (510) configured to:

• obtain a pixel error block with respect to an original block and a modified block for a candidate block among said plurality of candidate blocks;
• compute an error concentration metric for said pixel error block, by computing an entropy of said pixel error block;
• determine that said candidate block is a modifiable block in the case where said error concentration metric is lower than a concentration value.

8. Device (5) according to claim 6 or claim 7 wherein said pixel error block comprises, for each pixel, the absolute difference between the pixel value of said original block and the pixel value of said modified block.

9. Device (5) according to claim 6 or claim 7 wherein said pixel error block comprises, for each pixel, the square distance difference between the pixel value of said original block and the pixel value of said modified block.

**Patentansprüche**

1. Verfahren zur Wasserzeichenmarkierung von Videobildern, bei dem veränderbare Blöcke von mehreren Kandidatenblöcken ausgewählt werden, wobei das Verfahren umfasst:

• Ermitteln (210, 310) eines Pixelfehlerblocks (e) in Bezug auf einen Originalblock (∘) und einen modifizierten Block (w) für einen Kandidatenblock von den mehreren Kandidatenblöcken;
• Bestimmen (220) einer Fehlerkonzentrationsmetrik (ec) für den Pixelfehlerblock, umfassend:

  ∘ Ermitteln (320) eines sortierten Fehlervektors (e*) durch Sortieren des Pixelfehlerblocks in absteigender Reihenfolge eines Fehlerwertes;
  ∘ Berechnen (324) eines normalisierten akkumulierten Fehlervektors (ec*) des sortierten Fehlervektors;
  ∘ Bestimmen (326) der Fehlerkonzentrationsmetrik (ec) durch Ermitteln eines Minimum-Indexes des normalisierten akkumulierten Fehlervektors, für den ein normalisierter akkumulierter Fehlerwert über einem Zielwert ($ec_T$) liegt;

• Bestimmen (230, 330), dass der Kandidatenblock ein modifizierbarer Block ist, in dem Fall, in dem die Fehlerkonzentrationsmetrik (ec) größer als ein Konzentrationswert ist.

2. Verfahren zur Wasserzeichenmarkierung von Videobildern, bei dem veränderbare Blöcke von mehreren Kandidatenblöcken ausgewählt werden, wobei das Verfahren umfasst:

  • Ermitteln (210, 310) eines Pixelfehlerblocks (e) in Bezug auf einen Originalblock (∘) und einen modifizierten Block (w) für einen Kandidatenblock von den mehreren Kandidatenblöcken;
  • Bestimmen (220) einer Fehlerkonzentrationsmetrik (ec) für den Pixelfehlerblock, umfassend ein Berechnen einer Entropie des Pixelfehlerblocks,
  • Bestimmen (230, 330), dass der Kandidatenblock ein modifizierbarer Block ist, in dem Fall, in dem die Fehlerkonzentrationsmetrik kleiner als ein Konzentrationswert ist.

3. Verfahren nach Anspruch 1 oder Anspruch 2, wobei der Pixelfehlerblock (e) die absolute Differenz zwischen dem Pixelwert des Originalblocks und dem Pixelwert des modifizierten Blocks für jedes Pixel umfasst.

4. Verfahren nach Anspruch 1 oder Anspruch 2, wobei der Pixelfehlerblock (e) die quadratische Abstandsdifferenz zwischen dem Pixelwert des Originalblocks und dem Pixelwert des modifizierten Blocks für jedes Pixel umfasst.

5. Computerlesbares Speichermedium, auf dem Programmanweisungen gespeichert sind, die, wenn sie von einem Computer ausgeführt werden, den Computer veranlassen, das Verfahren nach einem der Ansprüche 1 bis 4 auszuführen.

6. Vorrichtung (5) zur Wasserzeichenmarkierung von Videobildern, wobei modifizierbare Blöcke von mehreren Kandidatenblöcken ausgewählt werden, wobei die Vorrichtung mindestens einen Prozessor (510) umfasst, der konfiguriert ist, um:

  • einen Pixelfehlerblock in Bezug auf einen Originalblock und einen modifizierten Block für einen Kandidatenblock von den mehreren Kandidatenblöcken zu ermitteln;
  • eine Fehlerkonzentrationsmetrik für den Pixelfehlerblock zu berechnen, durch:

    ∘ Ermitteln eines sortierten Fehlervektors durch Sortieren des Pixelfehlerblocks in absteigender Reihenfolge eines Fehlerwerts;
    ∘ Berechnen eines normalisierten akkumulierten Fehlervektors des sortierten Fehlervektors;
    ∘ Bestimmen der Fehlerkonzentrationsmetrik durch Ermitteln eines Minimum-Indexes des normalisierten akkumulierten Fehlervektors, für den ein normalisierter akkumulierter Fehlerwert über einem Zielwert liegt;

  • Bestimmen, dass der Kandidatenblock ein modifizierbarer Block ist, in dem Fall, in dem die Fehlerkonzentrationsmetrik größer als ein Konzentrationswert ist.

7. Vorrichtung (5) zur Wasserzeichenmarkierung von Videobildern, wobei modifizierbare Blöcke von mehreren Kandidatenblöcken ausgewählt werden, wobei die Vorrichtung mindestens einen Prozessor (510) umfasst, der konfiguriert ist, um:

  • einen Pixelfehlerblock in Bezug auf einen Originalblock und einen modifizierten Block für einen Kandidatenblock von den mehreren Kandidatenblöcken zu ermitteln;
  • eine Fehlerkonzentrationsmetrik für den Pixelfehlerblock zu berechnen, indem eine Entropie des Pixelfehlerblocks berechnet wird;
  • Bestimmen, dass der Kandidatenblock ein modifizierbarer Block ist, in dem Fall, in dem die Fehlerkonzentrationsmetrik kleiner als ein Konzentrationswert ist.

8. Vorrichtung (5) nach Anspruch 6 oder Anspruch 7, wobei der Pixelfehlerblock die absolute Differenz zwischen dem Pixelwert des Originalblocks und dem Pixelwert des modifizierten Blocks für jedes Pixel umfasst.

9. Vorrichtung (5) nach Anspruch 6 oder Anspruch 7, wobei der Pixelfehlerblock die quadratische Abstandsdifferenz zwischen dem Pixelwert des Originalblocks und dem Pixelwert des modifizierten Blocks für jedes Pixel umfasst.

## Revendications

1. Procédé pour le tatouage numérique d'images vidéo dans lequel des blocs modifiables sont sélectionnés parmi une pluralité de blocs candidats, le procédé comprenant :

    • l'obtention (210, 310) d'un bloc d'erreurs de pixels (e) par rapport à un bloc d'origine (o) et un bloc modifié (w) pour un bloc candidat parmi ladite pluralité de blocs candidats ;
    • la détermination (220) d'une mesure de concentration d'erreurs (ec) pour ledit bloc d'erreurs de pixels, comprenant :

        o l'obtention (320) d'un vecteur d'erreurs triées (e*) en triant ledit bloc d'erreurs de pixels dans un ordre décroissant de valeur d'erreur ;
        o le calcul (324) d'un vecteur d'erreurs accumulées normalisées (ec*) dudit vecteur d'erreurs triées ;
        o la détermination (326) de ladite mesure de concentration d'erreurs (ec) en obtenant un indice minimal dudit vecteur d'erreurs d'accumulation normalisées pour lequel une valeur d'erreurs d'accumulation normalisées est au-dessus d'une valeur cible $(ec_T)$ ;

    • le fait de déterminer (230, 330) que ledit bloc candidat est un bloc modifiable dans le cas où ladite mesure de concentration d'erreurs (ec) est plus grande qu'une valeur de concentration.

2. Procédé pour le tatouage numérique d'images vidéo dans lequel des blocs modifiables sont sélectionnés parmi une pluralité de blocs candidats, le procédé comprenant :

    • l'obtention (210, 310) d'un bloc d'erreurs de pixels (e) par rapport à un bloc d'origine (o) et un bloc modifié (w) pour un bloc candidat parmi ladite pluralité de blocs candidats ;
    • la détermination (220) d'une mesure de concentration d'erreurs (ec) pour ledit bloc d'erreurs de pixels, comprenant le calcul d'une entropie dudit bloc d'erreurs de pixels,
    • le fait de déterminer (230, 330) que ledit bloc candidat est un bloc modifiable dans le cas où ladite mesure de concentration d'erreurs est plus faible qu'une valeur de concentration.

3. Procédé selon la revendication 1 ou la revendication 2 dans lequel ledit bloc d'erreurs de pixels (e) comprend, pour chaque pixel, la différence absolue entre la valeur de pixel dudit bloc d'origine et la valeur de pixel dudit bloc modifié.

4. Procédé selon la revendication 1 ou la revendication 2 dans lequel ledit bloc d'erreurs de pixels (e) comprend, pour chaque pixel, la différence de distance au carré entre la valeur de pixel dudit bloc d'origine et la valeur de pixel dudit bloc modifié.

5. Support de stockage lisible par ordinateur stockant des instructions de programme qui, lorsqu'elles sont exécutées par un ordinateur, amènent l'ordinateur à réaliser le procédé selon l'une quelconque des revendications 1 à 4.

6. Dispositif (5) pour le tatouage numérique d'images vidéo dans lequel des blocs modifiables sont sélectionnés parmi une pluralité de blocs candidats, le dispositif comprenant au moins un processeur (510) configuré pour :

    • obtenir un bloc d'erreurs de pixels par rapport à un bloc d'origine et un bloc modifié pour un bloc candidat parmi ladite pluralité de blocs candidats ;
    • calculer une mesure de concentration d'erreurs pour ledit bloc d'erreurs de pixels, en :

        ◦ obtenant un vecteur d'erreurs triées en triant ledit bloc d'erreurs de pixels dans un ordre décroissant de valeur d'erreur ;
        ◦ calculant un vecteur d'erreurs accumulées normalisées dudit vecteur d'erreurs triées ;
        ◦ déterminant ladite mesure de concentration d'erreurs en obtenant un indice minimal dudit vecteur d'erreurs d'accumulation normalisées pour lequel une valeur d'erreurs d'accumulation normalisées est au-dessus d'une valeur cible ;

    • déterminer que ledit bloc candidat est un bloc modifiable dans le cas où ladite mesure de concentration d'erreurs est plus grande qu'une valeur de concentration.

7. Dispositif (5) pour le tatouage numérique d'images vidéo dans lequel des blocs modifiables sont sélectionnés parmi une pluralité de blocs candidats, le dispositif comprenant au moins un processeur (510) configuré pour :

    • obtenir un bloc d'erreurs de pixels par rapport à un bloc d'origine et un bloc modifié pour un bloc candidat parmi ladite pluralité de blocs candidats ;

• calculer une mesure de concentration d'erreurs pour ledit bloc d'erreurs de pixels, en calculant une entropie dudit bloc d'erreurs de pixels ;

• déterminer que ledit bloc candidat est un bloc modifiable dans le cas où ladite mesure de concentration d'erreurs est plus faible qu'une valeur de concentration.

8. Dispositif (5) selon la revendication 6 ou la revendication 7 dans lequel ledit bloc d'erreurs de pixels comprend, pour chaque pixel, la différence absolue entre la valeur de pixel dudit bloc d'origine et la valeur de pixel dudit bloc modifié.

9. Dispositif (5) selon la revendication 6 ou la revendication 7 dans lequel ledit bloc d'erreurs de pixels comprend, pour chaque pixel, la différence de distance au carré entre la valeur de pixel dudit bloc d'origine et la valeur de pixel dudit bloc modifié.

MB

MB

120

Orig

Rag

p

100

110

Orig

OK

130

Fig 1

Fig 2

```
        ┌─────┐   ┌─────┐
        │  o  │   │  w  │
        └──┬──┘   └──┬──┘
           │         │
           ▼         ▼
      ┌──────────────────┐
 310  │  Compute error   │
      │  block per pixel │
      └────────┬─────────┘
               │
               ▼
```

**e**

| e(1) | | | | | | e(p) | | | | | | | | |
|------|--|--|--|--|--|------|--|--|--|--|--|--|--|--|

```
               │
               ▼
      ┌──────────────────┐
 322  │       sort       │
      └────────┬─────────┘
               │
               ▼
```

**e***

| | | | | | | $e^*(p)$ | | | | | | | | $e^*(N)$ |
|--|--|--|--|--|--|--|---------|--|--|--|--|--|--|--|

```
               │
               ▼
      ┌──────────────────┐
 324  │      accum       │
      └────────┬─────────┘
               │
               ▼
```

**ec***

| ec*(1) | | | | ec*(i) | | | | | | | | | | |
|--------|--|--|--|--------|--|--|--|--|--|--|--|--|--|--|

**ec** ⬆

```
               │
               ▼
      ┌──────────────────────┐
 326  │ Obtain ec from index of │
      │ ec*(i) above target ecт │
      └──────────┬───────────┘
                 │
 330             ▼
        ┌─────────────────┐
  Yes   │   ec > τec ?    │   No
   ┌────┤                 ├────┐
   │    └─────────────────┘    │
   ▼                           ▼
┌──────────┐            ┌──────────────┐
│Modifiable│            │ Not modifiable│
│  block   │            │    block     │
└──────────┘            └──────────────┘
```

Fig 3

Fig 4

**5**

**50** → **52** → **54** → **56** → **58**

FIGURE 5

**5**

**530**   **520**

**510**

**540**

FIGURE 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010021682 A1
- EP 2314073 B1
- US 2011142418 A1, HE SHAN
- WO 2015028098 A1
- WO 2010021682 A
- EP 2786496 A1

**Non-patent literature cited in the description**

- A Framework for Robust Watermarking of H.264-Encoded Video With Controllable Detection Performance. **MANELI NOORKAMI et al.** IEEE TRANSACTIONS ON INFORMATION FORENSICS AND SECURITY. IEEE, 01 March 2007, vol. 2, 14-23
- **SWANSON et al.** Transparent Robust Image Watermarking. *PROCEEDINGS OF THE SINGAPORE INTERNATIONAL CONFERENCE ON IMAGE PROCESSING,* 16 September 1996, vol. 3, 211-214